# EUROPÄISCHE PATENTANMELDUNG

(11) **EP 1 479 579 A1**
(43) Veröffentlichungstag der Anmeldung: **24.11.2004**
(21) Anmeldenummer: 04010776.5
(22) Anmeldetag: 06.05.2004
(51) Int. Cl.: B60T 7/12, B60T 13/74, F16D 55/22, F16D 65/38

(54) **Fahrzeug mit einem Scheibenbremssystem und Verfahren hierzu**

(30) Priorität: 21.05.2003 DE 10322879
(71) Anmelder: DaimlerChrysler AG, 70567 Stuttgart (DE)
(72) Erfinder: Fischer, Jörg, 73733 Esslingen (DE)

(57) **Zusammenfassung**

In einem Fahrzeug ist ein Scheibenbremssystem (2) vorgesehen, das eine mit einem Fahrzeugrad (1) verbundene Bremsscheibe (3) und einen Bremsaktuator (5) umfasst, bei dessen Betätigung ein mit dem Bremsaktuator (5) verbundener Bremsbelagträger (4) mit Bremsbelägen auf die Bremsscheibe einwirkt. Der Bremsaktuator (5) ist über ein von einer Regel- und Steuereinheit (8) in Abhängigkeit von Fahrzeugzustands- und Betriebsgrößen zu erzeugendes Stellsignal einzustellen.

Zwischen dem Bremsaktuator (5) und dem Bremsbelagträger (4) ist eine Nachstelleinheit (7) angeordnet, über die das Lüftspiel zwischen Bremsbelagträger (4) und Bremsscheibe einstellbar ist. Weiterhin ist über eine Betriebszustands-Beobachtereinheit (9) eine den Zustand zumindest eines Aggregates des Fahrzeuges repräsentierendes Zustandssignal zu erzeugen, wobei die Einstellung der Nachstelleinheit (7) in Abhängigkeit des Wertes des Zustandssignales erfolgt.

## Beschreibung

Die Erfindung bezieht sich auf ein Fahrzeug mit einem Scheibenbremssystem und auf ein Verfahren hierzu nach dem Oberbegriff des Anspruches 1 bzw. 9.

Aus der Druckschrift DE 198 13 912 A1 ist ein Verfahren zum Einstellen bzw. Ändern des Lüftspiels zwischen den Bremsbelägen und den Reibflächen der Fahrzeugbremsen mittels steuer- und regelbaren Abhebe- und Rückholvorgängen für die Bremsbeläge bekannt. Die Änderung des Lüftspiels wird in Abhängigkeit einer Betätigung des Gaspedals durchgeführt, wobei im Falle einer Reduktion des Gaspedaldruckes und/oder einer Freigabe des Gaspedals das Lüftspiel reduziert wird. Wird das Gaspedal betätigt, wird dagegen ein größeres Lüftspiel eingestellt. Bei Wegnahme des Gaspedaldrucks wird die Zeit, die für einen Wechsel vom betätigten Gaspedal auf ein betätigtes Bremspedal benötigt wird, für die Überwindung des Lüftspiels genutzt, so dass die Bremswirkung unmittelbar bei Betätigung des Bremspedales eintreten kann.

Zur Einstellung des Lüftspiels wird der Bremsaktuator des Scheibenbremssystems betätigt. Dies erfordert jedoch einen erheblichen energetischen Aufwand, da der Bremsaktuator grundsätzlich groß dimensioniert sein muss, um im Bremsfall die geforderte Bremsleistung erzeugen zu können und daher auch bei einer Lüftspielverstellung hohe Massen und Volumenströme bewegt werden müssen. Außerdem erfolgt eine Aktuatorbetätigung auch für den Fall, dass der Fahrer lediglich den Fuß vom Gaspedal nimmt, ohne die Bremse auszulösen.

Der Erfindung liegt das Problem zugrunde, mit geringem energetischen Aufwand bei zugleich hoher Funktionssicherheit den Abstand zwischen Bremsbelagträger und Bremsscheibe in einem Scheibenbremssystem als Funktion von Zustands- und Betriebsgrößen des Fahrzeuges einzustellen.

Dieses Problem wird erfindungsgemäß bei einem Fahrzeug mit einem Scheibenbremssystem mit den Merkmalen des Anspruches 1 und bei einem zugeordneten Verfahren mit den Merkmalen des Anspruches 9 gelöst. Die Unteransprüche geben zweckmäßige Weiterbildungen an.

Das Scheibenbremssystem umfasst eine mit einem Fahrzeugrad des Fahrzeuges verbundene Bremsscheibe sowie einen Bremsaktuator, bei dessen Betätigung ein mit dem Bremsaktuator verbundener Bremsbelagträger mit Bremsbelägen auf die Bremsscheibe einwirkt und auf diese ein Bremsmoment überträgt. Das Scheibenbremssystem ist als Break-by-Wire-System ausgeführt, bei dem der Bremsaktuator über ein von einer Regel- und Steuereinheit in Abhängigkeit von Fahrzeugzustands- und Fahrzeugbetriebsgrößen zu erzeugendes Stellsignal eingestellt werden kann. Zusätzlich zu dem Bremsaktuator ist zwischen diesem und dem Bremsbelagträger eine Nachstelleinheit angeordnet, die unabhängig vom Bremsaktuator über Stellsignale der Regel- und Steuereinheit zur Feineinstellung des Abstandes zwischen Bremsbelagträger und Bremsscheibe (Lüftspiel) betätigbar ist.

Erfindungsgemäß ist vorgesehen, dass mindestens eine Betriebszustands-Beobachtereinheit im Fahrzeug zur Erzeugung eines den Zustand zumindest eines Aggregates des Fahrzeugs und/oder einer Umgebungsbedingung repräsentierenden Zustandssignals im Fahrzeug angeordnet ist und dass in der Regel- und Steuereinheit das die Nachstelleinheit beaufschlagende Stellsignal als Funktion des Zustandssignals der Beobachtereinheit erzeugbar ist. Auf diese Weise wird die Nachstelleinheit mit der Betriebszustands-Beobachtereinheit funktional auf Signalebene gekoppelt. Das Lüftspiel kann als Funktion des Zustandes eines oder mehrerer Aggregate des Fahrzeuges - beispielsweise der Brennkraftmaschine, einem verschleißlosen Bremssystem, dem Lenksystem, der Pedaleinheit oder auch der Interaktion mit der Umwelt wie zum Beispiel die Fahrbahnneigung oder dem Abstand zu einem vorausfahrenden Fahrzeug - eingestellt werden. Das Lüftspiel wird hierbei insbesondere bei Erreichen eines kritischen Zustandes reduziert, um sicherzustellen, dass in kürzestmöglicher Zeit ein Bremsmoment erzeugbar ist, und andererseits wieder auf einem höheren Wert gesetzt, sobald der kritische Zustand wieder verlassen wird, um ein Restschleifmoment der Bremsbeläge auf der Bremsscheibe und dadurch bedingten Verschleiß sowie höheren Kraftstoffverbrauch zu vermeiden.

Die Betriebszustands-Beobachtereinheiten können im Fahrzeug örtlich verteilt und den jeweiligen Aggregaten zugeordnet sein, deren aktueller Zustand von dem Zustandssignal repräsentiert wird. Es ist aber auch möglich, eine zentrale Betriebszustands-Beobachtereinheit vorzusehen, der dann die jeweiligen Zustandssignale zugeführt werden, welche beispielsweise von Sensorsystemen aufgenommen werden.

Bei dem erfindungsgemäßen Verfahren zum Betrieb eines Fahrzeuges mit einem Scheibenbremssystem wird der Abstand zwischen Bremsbelagträger und Bremsscheibe mit Hilfe der Nachstelleinheit in Abhängigkeit des aktuellen Zustands zumindest eines Aggregates des Fahrzeuges eingestellt. Die Nachstelleinheit wird unabhängig von dem Bremsaktuator des Scheibenbremssystems betätigt.

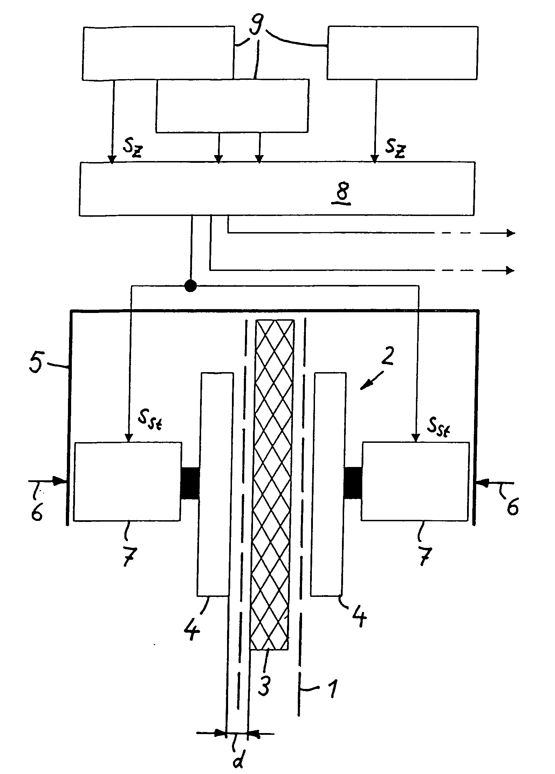

Weitere Vorteile und zweckmäßige Ausführungen sind den weiteren Ansprüchen, der Figurenbeschreibung und der Zeichnung zu entnehmen, in der als Teil eines Fahrzeuges ein Fahrzeugrad mit einem Scheibenbremssystem dargestellt ist, wobei dem Scheibenbremssystem Nachstelleinheiten zur Einstellung des Lüftspiels zugeordnet sind.

Das Fahrzeugrad 1 ist in einem Kraftfahrzeug verbaut, beispielsweise in einem Nutzfahrzeug oder in einem Personenkraftwagen, und ist mit einem Scheibenbremssystem 2 ausgestattet, welches eine mit dem Rad 1 verbundene Bremsscheibe 3 sowie zwei beidseitig der Bremsscheibe 3 angeordnete und auf die Seiten der Scheibe wirkende Bremsbeläge auf Bremsbelagträgern 4 umfasst. Die Bremsbelagträger 4 werden im Falle eines Bremsvorganges von einem über Stellsignale einzustellenden Bremsaktuator 5 in Pfeilrichtung 6 - der Achsrichtung des Rades - kraftbeaufschlagt. Zwischen dem Bremsaktuator 5 und den Bremsbelagträgern 4 sind ebenfalls in Achsrichtung wirkende Nachstelleinheiten 7 angeordnet, über deren Betätigung das Lüftspiel d - der Abstand zwischen den Bremsbelägen auf den Bremsbelagträgern 4 und der Bremsscheibe 3 - unabhängig von der Betätigung des Bremsaktuators 5 einstellbar ist.

Die Ansteuerung bzw. Einstellung des Bremsaktuators 5 und der Nachstelleinheiten 7 erfolgt über Stellsignale S_{St} einer Regel- und Steuereinheit 8 in Abhängigkeit von Zustands- und Betriebsgrößen des Fahrzeuges sowie in Abhängigkeit von Umgebungsbedingungen. Zweckmäßig sind eine Mehrzahl einzelner Betriebszustands-Beobachtereinheiten 9 vorgesehen, die jeweils einem Aggregat im Fahrzeug zugeordnet sind bzw. über die jeweils eine Umgebungsbedingung bzw. ein Komplex von Umgebungsbedingungen zu erfassen ist. Die Betriebszustands-Beobachtereinheiten 9 liefern jeweils Zustandssignale S_{Z}, die den aktuellen Zustand des betreffenden Aggregates bzw. der Umgebungsbedingungen repräsentieren. Diese Zustandssignale S_{Z} werden als Eingangssignale der Regel- und Steuereinheit 8 zugeführt, in der die Zustandssignale gemäß einer hinterlegten Berechnungsvorschrift ausgewertet und in der in Abhängigkeit des Wertes der Zustandssignale die Stellsignale S_{St} erzeugt werden, die den Nachstelleinheiten 7 zur Einstellung des gewünschten Lüftspiels d zugeführt werden. Ebenso können Stellsignale zur Einstellung des Bremsaktuators 5 erzeugt werden, wobei die Einstellung des Bremsaktuators 5 unabhängig von der Einstellung der Nachstelleinheiten 7 erfolgt.

Die Größe des Lüftspiels d bemisst sich in Abhängigkeit der Höhe der Zustandssignale S_{Z}, die von den Betriebszustandsbeobachter-Einheiten 9 geliefert werden. Liegt der Wert des Zustandssignals S_{Z} innerhalb eines vordefinierten, sicherheitskritischen Bereiches, so wird das Lüftspiel auf einen Minimalabstand dₘᵢₙ gesetzt, wodurch Zeitverzögerungen beim Auslösen eines Bremsvorganges praktisch eliminiert werden können. Liegt das Zustandssignal S_{Z} dagegen außerhalb des sicherheitskritischen Bereiches, so wird das Lüftspiel auf einen Normabstand d_{Norm} eingestellt bzw. wird der Normabstand d_{Norm} beibehalten, wobei der Normabstand d_{Norm} größer ist als der Minimalabstand dₘᵢₙ. Über den Normabstand d_{Norm} können unerwünschte Restschleifmomente an der Bremsscheibe ausgeschlossen werden.

Über die Betriebszustands-Beobachtereinheiten 9 können unterschiedliche Aggregate im Fahrzeug bzw. unterschiedliche Umgebungsbedingungen erfasst werden. Hierzu gehören insbesondere der Status eines verschleißlosen Bremssystems im Fahrzeug, welches insbesondere bei Nutzfahrzeugen eingesetzt wird. Darüber hinaus können die aktuelle Fahrbahnneigung ermittelt und über das Zustandssignal repräsentiert werden, das einem kritischen Bereich zugeordnet wird, falls die Fahrbahnneigung einen Grenzwert übersteigt. Aber auch Zustands- und Betriebsgrößen des Lenksystems, insbesondere der Lenkwinkel sowie die Gierrate des Fahrzeuges, können über Zustandssignale erfasst werden Weitere, zu erfassende Kenngrößen sind die Betätigungsgeschwindigkeit des vom Fahrer zu betätigenden Beschleunigungspedals, wobei ein sicherheitskritischer Zustand zur Verringerung des Lüftspiels insbesondere dann vorliegt, wenn ein Schwellwert in negativer Richtung überschritten wird, was auf ein plötzliches Verlassen des Beschleunigungspedales rückschließen lässt. Weiterhin ist es möglich, die Gesamtmasse des Fahrzeuges zu berücksichtigen, was insbesondere bei Zugsystemen auch die Masse eines Anhängerfahrzeuges umfasst. Auch bei Unterschreitung eines sicherheitskritischen Abstandes zu einem vorausfahrenden Fahrzeug kann ein sicherheitskritisches Zustandssignal erzeugt werden.

In der Regel- und Steuereinheit 8 können diese Zustandssignale sowohl einzeln als auch in Kombination mit Wichtung der einzelnen Zustandssignale zu sicherheitskritischen Einstufungen führen, woraufhin Stellsignale zur Beaufschlagung der Nachstelleinheiten generiert werden können. Darüber hinaus ist es auch möglich, in der Regel- und Steuereinheit in Abhängigkeit der zugeführten Zustandssignale weitere Stellsignale zu erzeugen, die zur Einstellung anderer Fahrzeugaggregate herangezogen werden.

## Patentansprüche

1. Fahrzeug mit einem Scheibenbremssystem (2), das eine mit einem Fahrzeugrad (1) verbundene Bremsscheibe (3) und einen Bremsaktuator (5) umfasst, bei dessen Betätigung ein mit dem Bremsaktuator (5) verbundener Bremsbelagträger (4) mit Bremsbelägen auf die Bremsscheibe (3) einwirkt, wobei der Bremsaktuator (5) über ein von einer Regel- und Steuereinheit (8) in Abhängigkeit von Fahrzeug-Zustands- und Betriebsgrößen und/oder Umgebungsbedingungen zu erzeugendes Stellsignal (S_{St}) einzustellen ist,
**dadurch gekennzeichnet,**
**dass** zwischen dem Bremsaktuator (5) und dem Bremsbelagträger (4) eine Nachstelleinheit (7) angeordnet ist, die unabhängig vom Bremsaktuator (5) über ein Stellsignal (S_{St}) der Regel- und Steuereinheit (8) betätigbar und über die das Lüftspiel (d) zwischen Bremsbelagträger (4) und Bremsscheibe (3) einstellbar ist, dass mindestens eine Betriebszustands-Beobachtereinheit (9) im Fahrzeug zur Erzeugung eines den Zustand zumindest eines Aggregates des Fahrzeugs repräsentierenden Zustandssignals (S_{Z}) vorgesehen ist und dass in der Regel- und Steuereinheit (8) das die Nachstelleinheit (7) beaufschlagende Stellsignal (S_{St}) in Abhängigkeit des Wertes des Zustandssignals (S_{Z}) erzeugbar ist.

2. Fahrzeug nach Anspruch 1,
**dadurch gekennzeichnet,**
**dass** für den Fall, dass das Zustandssignal innerhalb eines sicherheitskritischen Bereiches liegt, das Lüftspiel zwischen Bremsscheibe (3) und Bremsbelag auf einen Minimalabstand (dₘᵢₙ) reduzierbar ist und dass für den Fall, dass das Zustandssignal außerhalb des sicherheitskritischen Bereiches liegt, das Lüftspiel zwischen Bremsscheibe (3) und Bremsbelag auf größeren Normabstand (d_{Norm}) einstellbar ist.

3. Fahrzeug nach Anspruch 2,
**dadurch gekennzeichnet,**
**dass** das Zustandssignal einer Betriebszustands-Beobachtereinheit (9) den Status eines verschleißlosen Bremssystems im Fahrzeug repräsentiert.

4. Fahrzeug nach Anspruch 2 oder 3,
**dadurch gekennzeichnet,**
**dass** das Zustandssignal einer Betriebszustands-Beobachtereinheit (9) die Fahrbahnneigung repräsentiert.

5. Fahrzeug nach einem der Ansprüche 2 bis 4,
**dadurch gekennzeichnet,**
**dass** die Zustandssignale einer Betriebszustands-Beobachtereinheit (9) den Lenkwinkel und die Gierrate repräsentiert.

6. Fahrzeug nach einem der Ansprüche 2 bis 5,
**dadurch gekennzeichnet,**
**dass** das Zustandssignal einer Betriebszustands-Beobachtereinheit (9) die Betätigungsgeschwindigkeit des vom Fahrer zu betätigenden Beschleunigungspedals repräsentiert.

7. Fahrzeug nach einem der Ansprüche 2 bis 6,
**dadurch gekennzeichnet,**
**dass** das Zustandssignal einer Betriebszustands-Beobachtereinheit (9) den Abstand zu einem vorausfahrenden Fahrzeug repräsentiert.

8. Fahrzeug nach einem der Ansprüche 2 bis 7,
**dadurch gekennzeichnet,**
**dass** das Zustandssignal einer Betriebszustands-Beobachtereinheit (9) die Gesamtmasse des Fahrzeugs repräsentiert.

9. Verfahren zum Betrieb eines Fahrzeugs mit einem Scheibenbremssystem, insbesondere zum Betrieb eines Fahrzeugs nach einem der Ansprüche 1 bis 8, wobei das Scheibenbremssystem (2) eine mit einem Fahrzeugrad (1) verbundene Bremsscheibe (3) und einen Bremsaktuator (5) umfasst, bei dessen Betätigung ein mit dem Bremsaktuator (5) verbundener Bremsbelagträger (4) mit Bremsbelägen auf die Bremsscheibe (3) einwirkt, und wobei der Bremsaktuator (5) in Abhängigkeit von Fahrzeug-Zustands- und Betriebsgrößen und/oder Umgebungsbedingungen eingestellt wird,
**dadurch gekennzeichnet,**
**dass** mithilfe der Nachstelleinheit (7) der Abstand zwischen Bremsbelagträger (4) und Bremsscheibe (3) in Abhängigkeit des aktuellen Zustands zumindest eines Aggregates des Fahrzeugs eingestellt wird.
